# EUROPEAN PATENT APPLICATION

(11) **EP 4 848 253 A1**
(43) Date of publication of application: **02.12.2026**
(21) Application number: 24920309.2
(22) Date of filing: 24.01.2024
(51) Int. Cl.: G08G 1/09, H04B 7/24, H04W 88/00

(54) **COMMUNICATION SYSTEM, ROADSIDE DEVICE, PROGRAM, AND COMMUNICATION METHOD**

(71) Applicant: Mitsubishi Electric Corporation, Tokyo 100-8310 (JP)
(72) Inventor: MAKINO Shinya, Tokyo 100-8310 (JP); IWAYAMA Naofumi, Tokyo 100-8310 (JP); INOUE Noriaki, Tokyo 100-8310 (JP); SATO Kazuya, Tokyo 100-8310 (JP); HASEGAWA Fumiki, Tokyo 100-8310 (JP)
(74) Representative: Witte, Weller & Partner Patentanwälte mbB
(86) International application number: PCT/JP2024/002082
(87) International publication number: WO 2025/158587

(57) **Abstract**

A communication system (100) includes a vehicle (110), a roadside device (130) disposed along a road on which the vehicle (110) runs, and a server-side system (150) that predicts a communication quality of a communication path from a V2X application server (152) that provides a V2X service to the vehicle (110), to the roadside device (130). The roadside device (130) transmits a prediction request, prediction information, and position information indicating a position of the roadside device (130) to the server-side system (150) sequentially at a predetermined time interval. The server-side system (150) executes prediction of the communication quality by using the prediction information and the position information indicating the position of the roadside device (130) each time the server-side system (150) receives the prediction request, and then transmits a prediction result to the roadside device (130) sequentially. The roadside device (130) stores the prediction result sequentially and transmits the prediction result stored latest to the vehicle (110) when a prediction request is received from the vehicle (110).

## Description

### TECHNICAL FIELD

The present disclosure relates to a communication system, a roadside device, a program, and a communication method.

### BACKGROUND ART

Remote driving, autonomous driving, autonomous parking, and the like are known as Vehicle to X (V2X) services. In order to implement the V2X services, Quality of Service (QoS) is predicted. By notifying a vehicle of QoS Sustainability, which is a prediction result thereof, the vehicle can take actions such as stopping, decelerating, or steering before the QoS degrades. Such a notification is also referred to as an In-advance QoS Notification (IQN). Further, these actions are also referred to as V2X adaptation.

QoS at the position of a vehicle is predicted by a request from a vehicle to a server and then the vehicle obtains QoS Sustainability, which is then transmitted from the server to the vehicle (see, for example, Non-Patent Reference 1).

### PRIOR ART REFERENCE

### NON-PATENT REFERENCE

Non-Patent Reference 1: 3GPP TS 23.287 V18.1.0, 2023

### SUMMARY OF THE INVENTION

### PROBLEM TO BE SOLVED BY THE INVENTION

However, in order for a vehicle to receive QoS Sustainability, the vehicle needs to undergo a sequence described in Non-Patent Reference 1 and the like. As a result, there is a problem in that a delay time until the vehicle receives the QoS Sustainability becomes longer than an allowable delay time for receiving QoS Sustainability in a V2X application, which causes a delay in V2X adaptation.

Accordingly, one or more aspects of the present disclosure aim to reduce the delay until a vehicle receives QoS Sustainability.

### MEANS OF SOLVING THE PROBLEM

A communication system according to one aspect of the present disclosure includes: a vehicle; a roadside device to be disposed along a road on which the vehicle runs; and a prediction system configured to predict a communication quality of a communication path from a service device to the roadside device, the service device being configured to provide a V2X service to the vehicle, wherein the roadside device is configured to transmit a prediction request, prediction information, and position information to the prediction system sequentially at a predetermined time interval, the prediction request requesting prediction of the communication quality, the prediction information being information necessary for the prediction, the position information indicating a position of the roadside device, wherein the prediction system is configured to execute prediction of the communication quality by using the prediction information and the position information each time the prediction system receives the prediction request, and transmit a prediction result to the roadside device sequentially, the prediction result being a result of the prediction, and wherein the roadside device is configured to store the prediction result sequentially and transmit the prediction result stored latest to the vehicle when the roadside device receives the prediction request from the vehicle.

A roadside device according to one aspect of the present disclosure is disposed along a road on which a vehicle runs, the roadside device including: a first communication unit configured to transmit a prediction request, prediction information, and position information to a prediction system sequentially at a predetermined time interval and sequentially receive a prediction result from the prediction system as a response to the prediction request, the prediction request requesting prediction of a communication quality of a communication path from a service device to the roadside device, the prediction information being information necessary for the prediction, the position information indicating a position of the roadside device, the prediction system being configured to predict the communication quality of the communication path, the service device being configured to provide a V2X service to the vehicle, the prediction result being a result of the prediction; a storage unit configured to store the prediction result; a second communication unit configured to receive a prediction request from the vehicle; and a read control unit configured to read the prediction result stored latest when the prediction request is received from the vehicle, and cause the second communication unit to transmit the read prediction result to the vehicle.

A program according to one aspect of the present disclosure causes a computer to function as a roadside device disposed along a road on which a vehicle runs, the program causing the computer to function as: a first communication unit configured to transmit a prediction request, prediction information, and position information to a prediction system sequentially at a predetermined time interval and sequentially receive a prediction result from the prediction system as a response to the prediction request, the prediction request requesting prediction of a communication quality of a communication path from a service device to the roadside device, the prediction information being information necessary for the prediction, the position information indicating a position of the roadside device, the prediction system being configured to predict the communication quality of the communication path, the service device being configured to provide a V2X service to the vehicle, the prediction result being a result of the prediction; a storage unit configured to store the prediction result; a second communication unit configured to receive a prediction request from the vehicle; and a read control unit configured to read the prediction result stored latest when the prediction request is received from the vehicle, and cause the second communication unit to transmit the read prediction result to the vehicle.

A communication method according to one aspect of the present disclosure is performed by a roadside device disposed along a road on which a vehicle runs, the communication method including: transmitting a prediction request, prediction information, and position information to a prediction system sequentially at a predetermined time interval, the prediction request requesting prediction of a communication quality of a communication path from a service device to the roadside device, the prediction information being information necessary for the prediction, the position information indicating a position of the roadside device, the prediction system being configured to predict the communication quality of the communication path, the service device being configured to provide a V2X service to the vehicle; sequentially receiving a prediction result from the prediction system as a response to the prediction request, the prediction result being a result of the prediction; storing the prediction result; receiving a prediction request from the vehicle; reading the prediction result stored latest when the prediction request is received from the vehicle, and transmitting the read prediction result to the vehicle.

### EFFECTS OF THE INVENTION

According to one or more aspects of the present disclosure, the delay until a vehicle receives QoS Sustainability can be reduced.

### BRIEF DESCRIPTION OF THE DRAWINGS

FIG. 1 is a block diagram schematically illustrating a configuration of a communication system according to a first embodiment.
FIG. 2 is a first sequence diagram of an IQN as a comparative example.
FIG. 3 is a second sequence diagram of an IQN as a comparative example.
FIG. 4 is a block diagram schematically illustrating a main configuration of a vehicle in the first embodiment.
FIGS. 5A and 5B are block diagrams illustrating examples of hardware configurations.
FIG. 6 is a block diagram illustrating a schematic configuration of a roadside device of the first embodiment.
FIG. 7 is a sequence diagram illustrating a first example of a process executed in the communication system of the first embodiment.
FIG. 8 is a sequence diagram illustrating a second example of the process executed in the communication system according to the first embodiment.
FIG. 9 is a sequence diagram illustrating a third example of the process executed in the communication system according to the first embodiment.
FIG. 10 is a sequence diagram illustrating a fourth example of the process executed in the communication system according to the first embodiment.
FIG. 11 is a sequence diagram illustrating a fifth example of the process executed in the communication system according to the first embodiment.
FIG. 12 is a timing chart illustrating comparison between an operation of the comparative examples and an operation of the first embodiment.
FIG. 13 is a block diagram schematically illustrating a configuration of a communication system according to a second embodiment.
FIG. 14 is a block diagram schematically illustrating a main configuration of a vehicle in the second embodiment.
FIG. 15 is a block diagram illustrating a schematic configuration of a roadside device of the second embodiment.

### MODE FOR CARRYING OUT THE INVENTION

Hereinafter, embodiments will be described with reference to the drawings. The following embodiments are merely examples, and various modifications can be made thereto within the scope of the present disclosure.

### First Embodiment

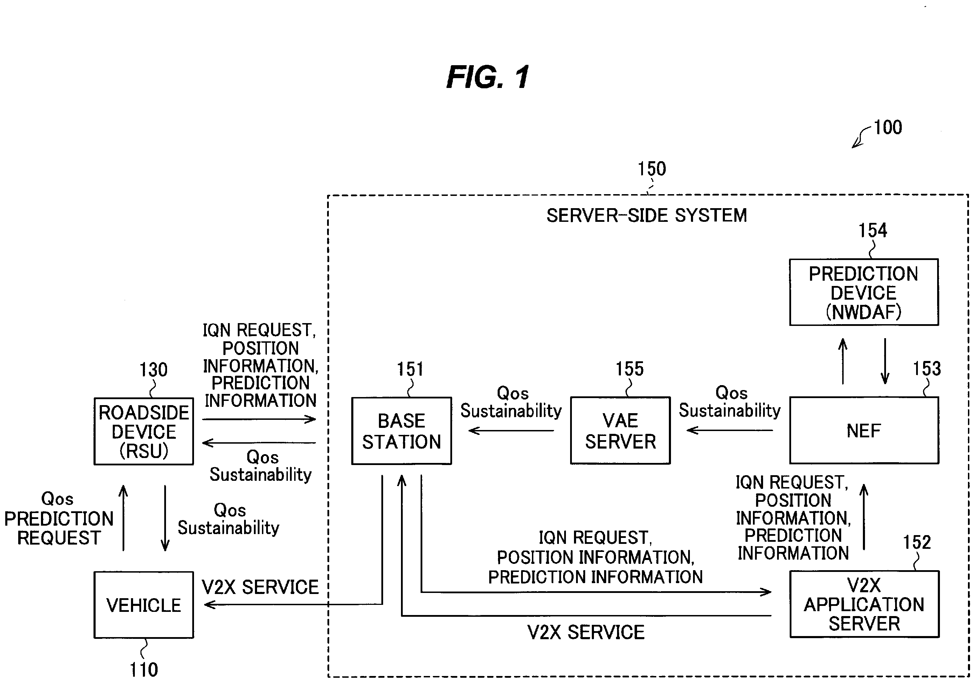

FIG. 1 is a block diagram schematically illustrating a configuration of a communication system 100 according to a first embodiment.

The communication system 100 includes a vehicle 110, a roadside device (Road Side Unit) 130, and a server-side system 150.

The server-side system 150 includes a base station 151, a V2X application server 152, a Network Exposure Function (NEF) 153, a prediction device 154, and a V2X Application Enabler (VAE) server 155.

Here, an overview of a conventional process for receiving QoS Sustainability will be described.

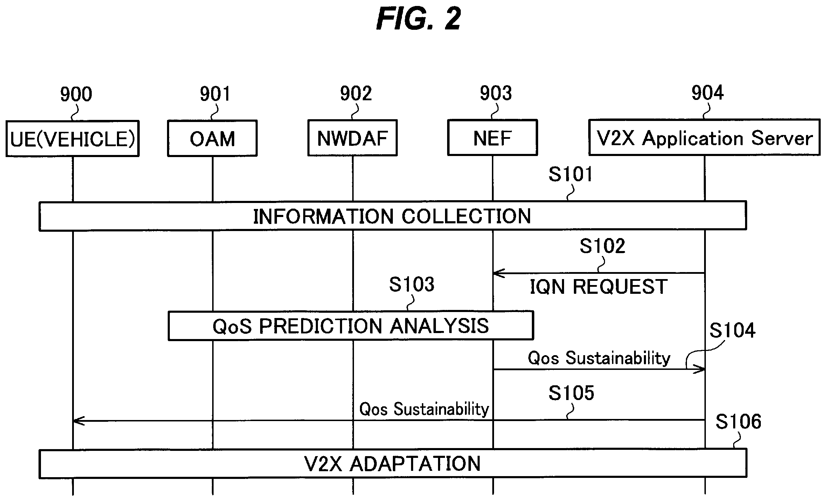

For example, in "3GPP TS 23.287 V18.1.0" described as Non-Patent Reference 1, a sequence of IQNs is described in Section 6.4.1. This sequence will be described with reference to FIG. 2.

FIG. 2 is a first sequence diagram of an IQN as a comparative example.

Here, it is assumed that processes are performed in a system including a vehicle 900, an Operation and Maintenance (OAM) 901, a Network Data Analytic Function (NWDAF) 902, an NEF 903, and a V2X Application Server 904.

The V2X Application Server 904 collects information such as an IQN request, position information about a position of the vehicle 900, requested QoS, and a QoS threshold from the vehicle 900 (S101).

The V2X Application Server 904 transmits the information collected in step S101 to the NEF 903 (S102). The NWDAF 902 receives the information via the NEF 903.

The NWDAF 902 predicts QoS based on the collected information in cooperation with the OAM (S103).

Then, the NWDAF 902 transmits QoS Sustainability indicating the result of the prediction to the V2X Application Server 904 via the NEF 903 (S104).

The V2X Application Server 904 transmits the QoS Sustainability to the vehicle 900 (S105).

Thus, the vehicle 900 can perform V2X adaptation (S106).

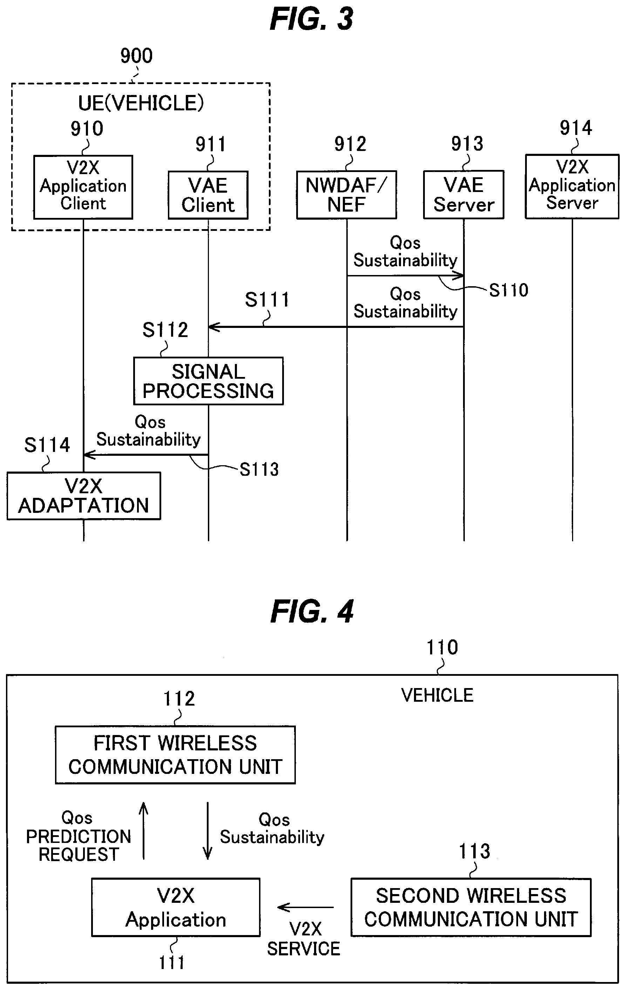

Further, the sequence of IQNs is also described in Chapter 5 of the following Non-Patent Reference 2. This sequence will be described with reference to FIG. 3.

Non-Patent Reference 2: 5GAA TR-200055, 2020

FIG. 3 is a second sequence diagram of an IQN as a comparative example.

Here, it is assumed that the processes are performed in a system including a V2X Application Client 910, a VAE Client 911, an NWDAF/NEF 912, a VAE Server 913, and a V2X Application Server 914.

It is also assumed that the V2X Application Client 910 and the VAE Client 911 are installed in the vehicle 900.

The VAE Server 913 receives QoS Sustainability (S110).

The VAE Server 913 transmits the QoS Sustainability to the VAE Client 911 (S111).

The VAE Client 911 executes signal processing for changing the QoS Sustainability into a state that is processable within the vehicle 900 (S112).

The VAE Client 911 transmits the QoS Sustainability to the V2X Application Client 910 (S113). As a result, the V2X Application Client 910 can perform V2X adaptation (S114).

In the processes indicated in FIGS. 2 and 3, since the vehicle 900 receives the QoS Sustainability from the prediction device, namely, the NWDAF 902 or the Network Data Analytic Function (NWDAF)/NEF 912, a delay time until receiving the QoS Sustainability becomes long.

Accordingly, in the first embodiment, the roadside device 130 constantly and continuously collects the latest QoS Sustainability adapted to each V2X service from the prediction device 154. When the roadside device 130 receives a QoS prediction request from the vehicle 110, the roadside device 130 transmits the collected latest QoS Sustainability to the vehicle 110. Thus, the vehicle 110 can receive the QoS Sustainability with low delay.

For example, the communication system 100 illustrated in FIG. 1 includes the vehicle 110, the roadside device 130 disposed along a road on which the vehicle 110 runs, and the server-side system 150 functioning as a prediction system that predicts a communication quality of a communication path from the V2X application server 152, which serves as a service device that provides a V2X service to the vehicle 110, to the roadside device 130.

The roadside device 130 transmits a prediction request requesting prediction of the communication quality, prediction information that is information necessary for the prediction, and position information indicating a position of the roadside device 130 to the server-side system 150 sequentially at a predetermined time interval.

The server-side system 150 executes prediction of the communication quality by using the transmitted prediction information and position information indicating the position of the roadside device 130 each time the server-side system 150 receives the prediction request from the roadside device 130, and sequentially transmits a prediction result that is a result of the prediction to the roadside device 130.

Then, the roadside device 130 stores the prediction results provided from the server-side system 150 sequentially, and transmits the latest one of the stored prediction results to the vehicle 110 when the roadside device 130 receives a prediction request from the vehicle 110.

Hereinafter, the details will be described.

The vehicle 110 transmits a QoS prediction request to the roadside device 130. The QoS prediction request is information indicating a prediction request for the communication quality.

FIG. 4 is a block diagram schematically illustrating a main configuration of the vehicle 110 in the first embodiment.

In FIG. 4, components required for the vehicle 110 to run are omitted.

The vehicle 110 includes a V2X Application 111, a first wireless communication unit 112, and a second wireless communication unit 113.

The V2X Application 111 performs a process required on the vehicle 110 side to receive provision of a V2X service.

For example, the V2X Application 111 transmits a QoS prediction request and prediction information to the nearest roadside device 130 via the first wireless communication unit 112. The prediction information is, for example, a V2X service type, an identification number of the vehicle 110, or the like, and is information necessary for receiving the provision of the V2X service.

Then, the V2X Application 111 receives QoS Sustainability from the nearest roadside device 130 via the first wireless communication unit 112 as a response to the QoS prediction request.

Further, the V2X Application 111 executes V2X adaptation according to the contents of the QoS Sustainability provided from the roadside device 130.

The first wireless communication unit 112 is a PC5 interface that performs V2X communication via a PC5 reference point.

Here, the first wireless communication unit 112 performs communication with the roadside device 130 by using wireless.

The second wireless communication unit 113 is a Uu interface that performs V2X communication via a Uu reference point.

Here, the second wireless communication unit 113 performs communication with the base station 151 by using wireless.

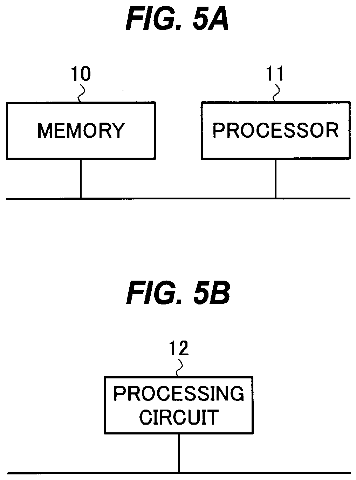

A part or all of the V2X Application 111 described above can be implemented, for example, by a memory 10 and a processor 11 such as a Central Processing Unit (CPU) that executes a program stored in the memory 10 as illustrated in FIG. 5A. Such a program may be provided via a network or may be provided by being recorded on a recording medium. That is, such a program may be provided, for example, as a program product.

Alternatively, a part or all of the V2X Application 111 can also be implemented, for example, by a processing circuit 12 such as a single circuit, a composite circuit, a processor operating based on a program, a parallel processor operating based on a program, an Application Specific Integrated Circuit (ASIC), or a Field Programmable Gate Array (FPGA) as illustrated in FIG. 5B.

As described above, the V2X Application 111 can be implemented by processing circuitry.

To return to FIG. 1, when the roadside device 130 receives a QoS prediction request from the vehicle 110, the roadside device 130 reads, from its own memory, QoS Sustainability corresponding to the QoS prediction request, and transmits the QoS Sustainability to the vehicle 110.

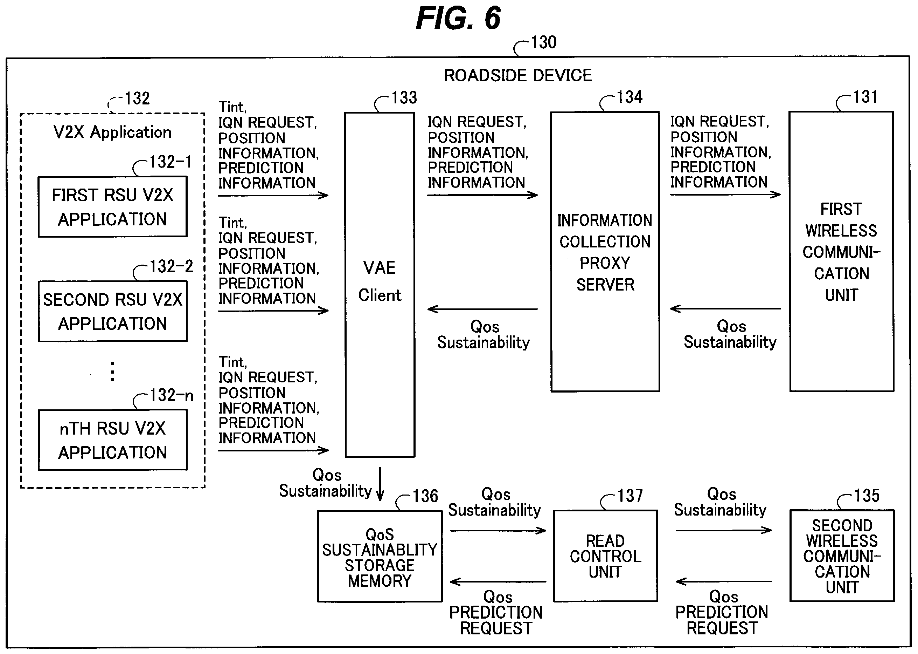

FIG. 6 is a block diagram illustrating a schematic configuration of the roadside device 130 of the first embodiment.

The roadside device 130 includes a first wireless communication unit 131 as a first communication unit, a V2X Application 132, a VAE Client 133, an information collection Proxy Server 134, a second wireless communication unit 135 as a second communication unit, a QoS Sustainability storage memory 136, and a read control unit 137.

The first wireless communication unit 131 is a Uu interface that performs V2X communication via the Uu reference point.

Here, the first wireless communication unit 131 performs communication with the base station 151 by using wireless.

For example, the first wireless communication unit 131 transmits a prediction request requesting prediction of the communication quality, prediction information that is information necessary for the prediction, and position information indicating the position of the roadside device 130 to the server-side system 150 sequentially at the predetermined time interval. Then, as a response to the prediction request, the first wireless communication unit 131 sequentially receives, from the server-side system 150, the prediction result that is the result of the prediction.

The V2X Application 132 performs a process required on the roadside device 130 side in order for the vehicle 110 to receive provision of the V2X service.

For example, the V2X Application 132 provides, to the VAE Client 133, an IQN request as a prediction request, prediction information, position information about the position of the roadside device 130, and a time interval Tint at which these pieces of information are periodically transmitted. Here, examples of the prediction information include a V2X service type related to an IQN, a requested QoS, a QoS prediction period, a QoS threshold for use in notifying the vehicle of the IQN, and the like. The QoS prediction period may also be expressed as a prediction timing.

The V2X Application 132 is a set of applications for respective V2X service types, and is composed of, for example, a first RSU V2X Application 132-1, a second RSU V2X Application 132-2, ..., and an nth RSU V2X Application 132-n, as illustrated in FIG. 6. Each of the first RSU V2X Application 132-1, the second RSU V2X Application 132-2, ..., and the nth RSU V2X Application 132-n provides, to the VAE Client 133, the IQN request, the prediction information, the position information about the position of the roadside device 130, and the time interval Tint at which these pieces of information are periodically transmitted.

The VAE Client 133 provides the information received from the V2X Application 132 to the information collection Proxy Server 134, acquires corresponding QoS Sustainability from the information collection Proxy Server 134, and stores the acquired QoS Sustainability in the QoS Sustainability storage memory 136.

When the information collection Proxy Server 134 receives, from the VAE Client 133, an IQN request, prediction information, position information about the position of the roadside device 130, and the time interval Tint, the information collection Proxy Server 134 periodically transmits the IQN request, the prediction information, and the position information at the time interval Tint to the V2X application server 152 via the first wireless communication unit 131.

Then, as a response to the IQN request, the information collection Proxy Server 134 receives QoS Sustainability via the first wireless communication unit 131 and provides the received QoS Sustainability to the VAE Client 133.

The second wireless communication unit 135 is a PC5 interface that performs the V2X communication via the PC5 reference point.

Here, the second wireless communication unit 135 performs communication with the vehicle 110 by using wireless.

For example, the second wireless communication unit 135 receives the QoS prediction request from the vehicle 110.

The QoS Sustainability storage memory 136 is a storage unit that stores the QoS Sustainability collected as described above.

When the read control unit 137 receives the QoS prediction request from the vehicle 110 via the second wireless communication unit 135, the read control unit 137 reads, from the QoS Sustainability storage memory 136, QoS Sustainability corresponding to the QoS prediction request, and transmits the read QoS Sustainability to the vehicle 110 via the second wireless communication unit 135.

A part or all of the read control unit 137, the V2X Application 132, the VAE Client 133, and the information collection Proxy Server 134 described above can be implemented, for example, by the memory 10 and the processor 11, such as a CPU, that executes the program stored in the memory 10, as illustrated in FIG. 5A. Such a program may be provided via a network or may be provided by being recorded on a recording medium. That is, such a program may be provided, for example, as a program product.

Alternatively, part or all of the read control unit 137, the V2X Application 132, the VAE Client 133, and the information collection Proxy Server 134 described above can be implemented, for example, by the processing circuit 12 such as a single circuit, a composite circuit, a processor operating based on the program, a parallel processor operating based on the program, an ASIC, or an FPGA as illustrated in FIG. 5B.

As described above, the read control unit 137, the V2X Application 132, the VAE Client 133, and the information collection Proxy Server 134 can be implemented by processing circuitry.

To return to FIG. 1, the base station 151 is a wireless base station that performs wireless communication.

The base station 151 transmits the IQN request, the prediction information, and the position information that are provided from the roadside device 130, to the V2X application server 152.

Then, as a response to the IQN request, the base station 151 receives QoS Sustainability from the VAE server 155, and transmits the QoS Sustainability to the roadside device 130.

Further, the base station 151 relays the V2X service that the vehicle 110 receives from the V2X application server 152.

The V2X application server 152 is a service device that provides the V2X service. Here, the V2X application server 152 provides the V2X service to the vehicle 110. The V2X application server 152 may be a physical server or a virtual server.

When the V2X application server 152 receives an IQN request, prediction information, and position information, the V2X application server 152 transmits the IQN request, the prediction information, and the position information to the prediction device 154 via the NEF 153.

The NEF 153 is a device that exposes a network function constituting a 5GC to an external entity.

The NEF 153 may be implemented by a single device. Alternatively, the NEF 153 may be included in the prediction device 154.

The prediction device 154 is a device that executes an NWDAF.

The prediction device 154 receives the IQN request, the prediction information, and the position information. The prediction device 154 predicts the QoS based on the prediction information and the position information. For example, the prediction device 154 predicts QoS of a communication path from the V2X application server 152 to the roadside device 130. The contents of the QoS include, for example, an error rate, a delay, a bit rate of the communication path, and the like.

The prediction device 154 transmits QoS Sustainability that is the prediction result of the QoS, to the roadside device 130.

The VAE server 155 is a device that mediates communication between the prediction device 154 that executes the NWDAF and the V2X Application 111 together with the VAE client 911.

Here, the VAE server 155 transmits the QoS Sustainability received from the NEF 153 to the base station 151.

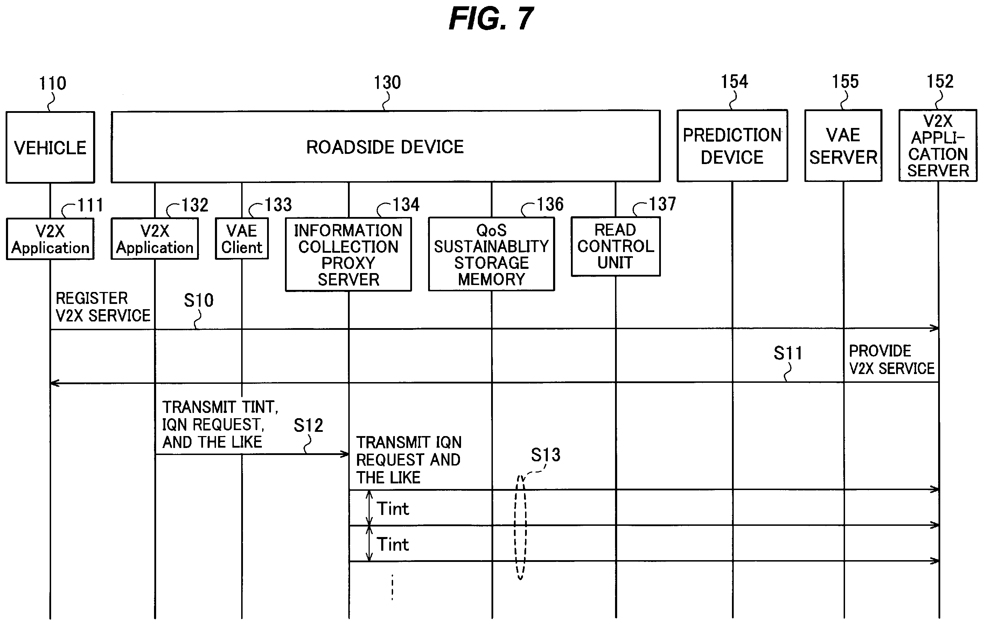

Next, the processes executed in the communication system 100 according to the first embodiment will be described with reference to the sequence diagrams illustrated in FIGS. 7 to 11.

In FIGS. 7 to 11 below, the base station 151 and the NEF 153 are omitted because they merely relay information.

FIG. 7 is a sequence diagram illustrating a first example of a process executed in the communication system 100 according to the first embodiment.

The V2X Application 111 of the vehicle 110 that desires a V2X service performs registration of the V2X service in the V2X application server 152 via the second wireless communication unit 113 (S10).

Then, the V2X application server 152 provides the V2X service to the vehicle 110 via the base station 151. The V2X Application 111 of the vehicle 110 receives the V2X service via the second wireless communication unit 113 (S11).

The V2X Application 132 of the roadside device 130 provides, to the information collection Proxy Server 134 via the VAE Client 133, an IQN request, prediction information, position information about the position of the roadside device 130, and the time interval Tint at which these pieces of information are periodically transmitted (S12). For example, the prediction information is information indicating the V2X service type related to the IQN, the requested QoS, the QoS prediction period, the QoS threshold used when notifying the vehicle of the IQN, or the like. The QoS prediction period may also be expressed as the prediction timing.

When the information collection Proxy Server 134 of the roadside device 130 receives the IQN request, the prediction information, the position information, and the time interval Tint from the V2X Application 132, the information collection Proxy Server 134 periodically transmits the IQN request, the prediction information, and the position information at the time interval Tint to the V2X application server 152 via the first wireless communication unit 131 and the base station 151 (S13).

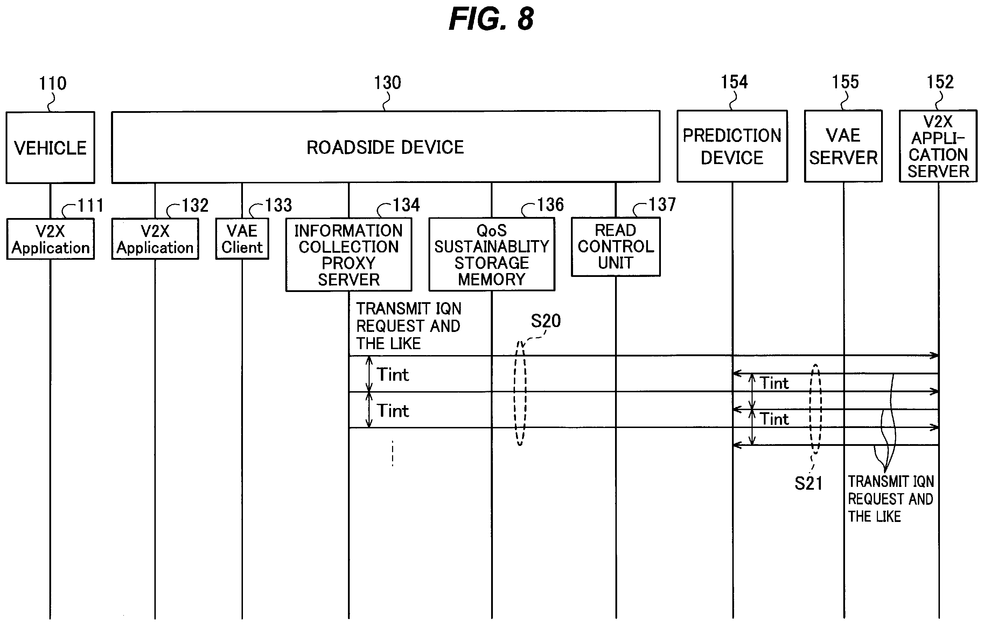

FIG. 8 is a sequence diagram illustrating a second example of the process executed in the communication system 100 according to the first embodiment.

Each time the V2X application server 152 receives the IQN request, the prediction information, and the position information from the information collection Proxy Server 134 of the roadside device 130 at the time interval Tint (S20), the V2X application server 152 transmits the IQN request, the prediction information, and the position information to the prediction device 154 via the NEF 153 (S21).

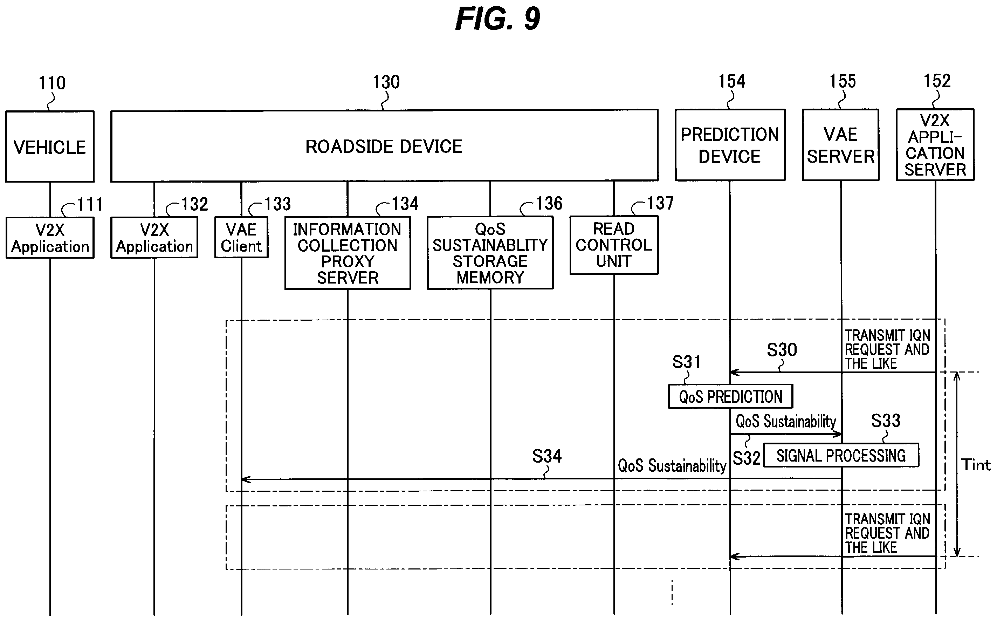

FIG. 9 is a sequence diagram illustrating a third example of the process executed in the communication system 100 according to the first embodiment.

When the prediction device 154 receives an IQN request, prediction information, and position information from the V2X application server 152 (S30), the prediction device 154 predicts QoS of the communication path from the V2X application server 152 to the roadside device 130 based on the prediction information, the position information, and the like (S31).

The prediction device 154 transmits the QoS Sustainability that is the prediction result of the QoS, to the VAE server 155 via the NEF 153 (S32).

The VAE server 155 performs signal processing for conforming to an API on the QoS Sustainability (S33).

Then, the VAE server 155 transmits the QoS Sustainability to the VAE Client 133 of the roadside device 130 via the base station 151 (S34).

The processes from steps S31 to S34 described above are repeated at the time interval Tint each time the prediction device 154 receives the IQN request, the prediction information, and the position information from the V2X application server.

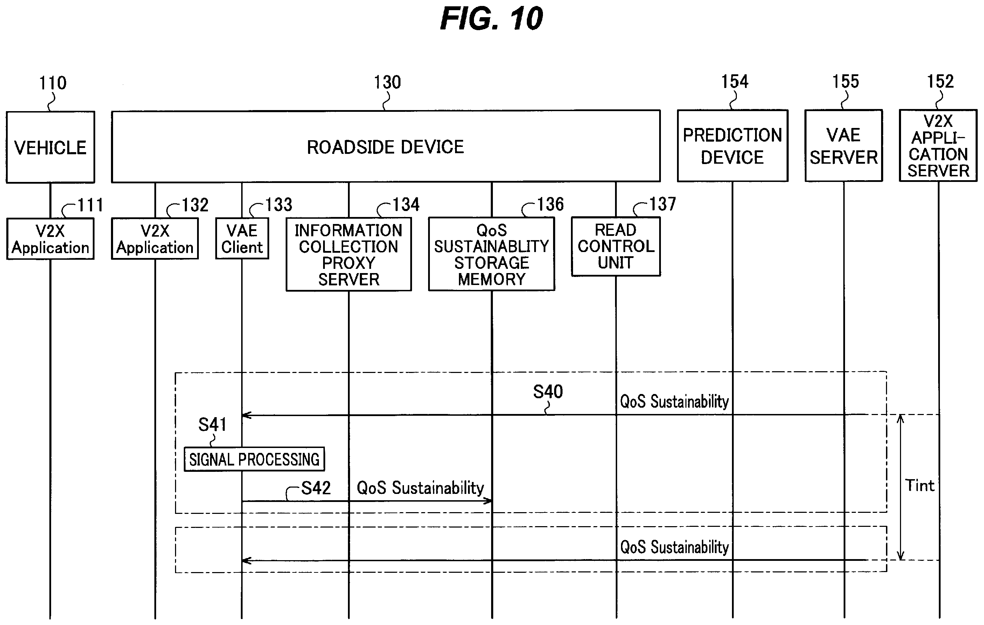

FIG. 10 is a sequence diagram illustrating a fourth example of the process executed in the communication system 100 according to the first embodiment.

The first wireless communication unit 131 of the roadside device 130 receives QoS Sustainability from the base station 151 (S40). The received QoS Sustainability is provided to the VAE Client 133 via the information collection Proxy Server 134.

The VAE Client 133 of the roadside device 130 executes signal processing on the QoS Sustainability such that the QoS Sustainability can be processed by the V2X Application 111 of the vehicle 110 (S41).

Then, the VAE Client 133 stores the processed QoS Sustainability in the QoS Sustainability storage memory 136 (S42).

The processes in steps S41 and S42 are repeated at the time interval Tint each time the VAE Client 133 receives the QoS Sustainability.

In step S42, the QoS Sustainability is stored in the QoS Sustainability storage memory 136, whereby the QoS Sustainability storage memory 136 is maintained in a state of constantly storing the latest QoS Sustainability.

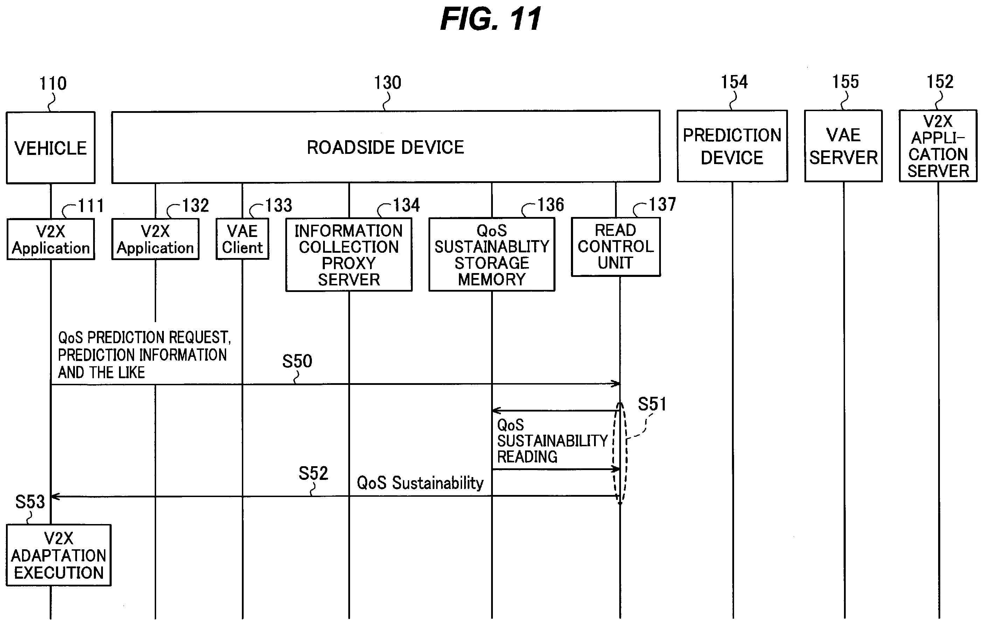

FIG. 11 is a sequence diagram illustrating a fifth example of the process executed in the communication system 100 according to the first embodiment.

The V2X Application 111 of the vehicle 110 transmits a QoS prediction request and prediction information to the nearest roadside device 130 via the first wireless communication unit 112 (S50). The prediction information is, for example, information indicating the V2X service type, the identification number of the vehicle 110, and the like.

The read control unit 137 of the roadside device 130 receives the QoS prediction request and the prediction information provided from the vehicle 110 via the second wireless communication unit 135. Then, in accordance with the QoS prediction request and the prediction information, the read control unit 137 reads, from the QoS Sustainability storage memory 136, the latest QoS Sustainability corresponding to the V2X service type that is to be provided to the vehicle 110 (S51).

Then, the read control unit 137 transmits the read QoS Sustainability to the vehicle 110 via the second wireless communication unit 135 (S52).

The V2X Application 111 of the vehicle 110 receives the QoS Sustainability from the roadside device 130 via the first wireless communication unit 112, and executes V2X adaptation in accordance with the contents of the received QoS Sustainability (S53).

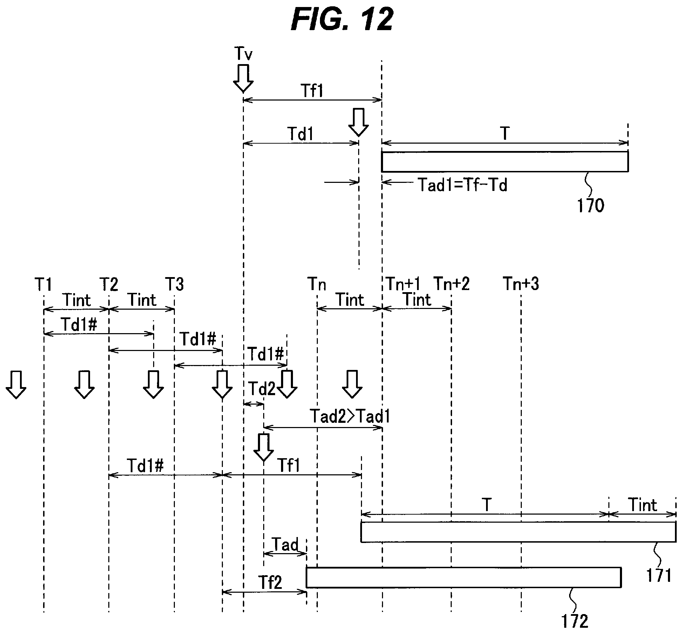

Next, the timing from when the vehicle 110 issues the IQN request or QoS prediction request until the vehicle 110 receives the QoS Sustainability will be described with reference to FIG. 12, which is a timing chart obtained by comparing an operation of the first embodiment with operations of the comparative examples illustrated in FIGS. 2 and 3.

FIG. 12 illustrates the timing in the comparative examples and the timing in the first embodiment.

In the comparative examples, it is assumed that the vehicle 900 transmits the IQN request at a timing denoted by time Tv, and receives QoS Sustainability after time Td1 has elapsed through the sequence illustrated in FIG. 2 or FIG. 3.

Further, the QoS prediction period 170 requested by the vehicle 900 is assumed to be a time interval T that starts after time Tf1 has elapsed from the time Tv. The QoS prediction period 170 is specific to a V2X service and is a prediction period defined for the V2X service.

Under the above assumptions of the comparative examples, since QoS Sustainability cannot be received at a timing earlier than the time Td1, the time Tf1 has to be greater than the time Td1. Thus, the QoS prediction cannot be requested at a timing earlier than the time Td1.

Further, when a difference between the time Tf1 and the time Td1 is small, a time margin Tad1 (= Tf1 - Td1) until the vehicle 900 executes the V2X application becomes small, which causes a risk that the V2X application cannot be appropriately executed.

In the operation of the first embodiment, the roadside device 130 transmits the IQN request at the time interval Tint. In the example illustrated in FIG. 12, IQN requests are assumed to be transmitted at times T1, T2, T3, ..., Tn, Tn+1, Tn+2, Tn+3, ... .

Further, it is assumed that a delay time from when the roadside device 130 transmits an IQN request until the roadside device 130 receives QoS Sustainability corresponding to the IQN request is denoted by Td1#.

Furthermore, it is also assumed that the vehicle 110 transmits a QoS prediction request at the time Tv and receives QoS Sustainability after time Td2 has elapsed from the transmission.

A QoS prediction period 171 in the IQN request of the roadside device 130 is defined as a time interval T + Tint starting after time Tf1 + Td1# has elapsed from an issuing timing of the IQN request.

The QoS prediction period 171 may advance by at most Tint relative to the QoS prediction period 170; however, by setting Tint to be smaller than an allowable prediction error τ that is allowed as a prediction error, QoS prediction can be performed within the allowable error range of the prediction period.

In general, since a certain degree of error is allowable in a QoS prediction period and it is often preferable, from a safety standpoint, to set the time window thereof relatively large, the time interval of the QoS prediction period 171 is set to T + Tint.

The time Td1# is a value substantially equivalent to the time Td1 in the comparative examples. The time Td1# varies depending on a position of the roadside device 130, a congestion state of the communication system 100, or the like. An average value thereof stored in advance in the roadside device 130 may be used as the time Td1#. Alternatively, a delay amount may be measured every time each IQN request is made, by using a timestamp or the like, and the latest measured value may be used as the time Td1#.

As illustrated in FIG. 12, in the operation of the first embodiment, at time T2 + Td1#, the roadside device 130 receives QoS Sustainability corresponding to the IQN request transmitted at the time T2. Thus, when the vehicle 110 transmits a QoS prediction request at the time Tv, the roadside device 130 transmits, at time Tv + Td2, QoS Sustainability corresponding to the IQN request transmitted at the time T2. Since the vehicle 110 and the roadside device 130 directly communicate with each other at nearby positions, it is assumed that a time at which the vehicle 110 receives the QoS Sustainability is also substantially equivalent to the time Tv + Td2.

In the first embodiment, the sequence from when the vehicle 110 transmits the QoS prediction request until the vehicle 110 receives the QoS Sustainability includes only two steps, as illustrated in FIG. 11. Thus, the time Td2 is much smaller than the time Td1 in the comparative examples.

Therefore, a time margin Tad2 from when the vehicle 110 receives the QoS Sustainability until the QoS prediction period starts becomes larger than the time margin Tad1 in the comparative examples, thereby making it possible to sufficiently secure a time window for performing a V2X adaptation operation.

As described above, since the time Td2 is much smaller than the time Td1, the time Tf until the start of the prediction period can be set to time Tf2 that is smaller than the time Tf1, while securing the time margin Tad2 necessary for performing the V2X adaptation operation. In FIG. 12, the QoS prediction period in this case is described as a QoS prediction period 172.

### Second Embodiment

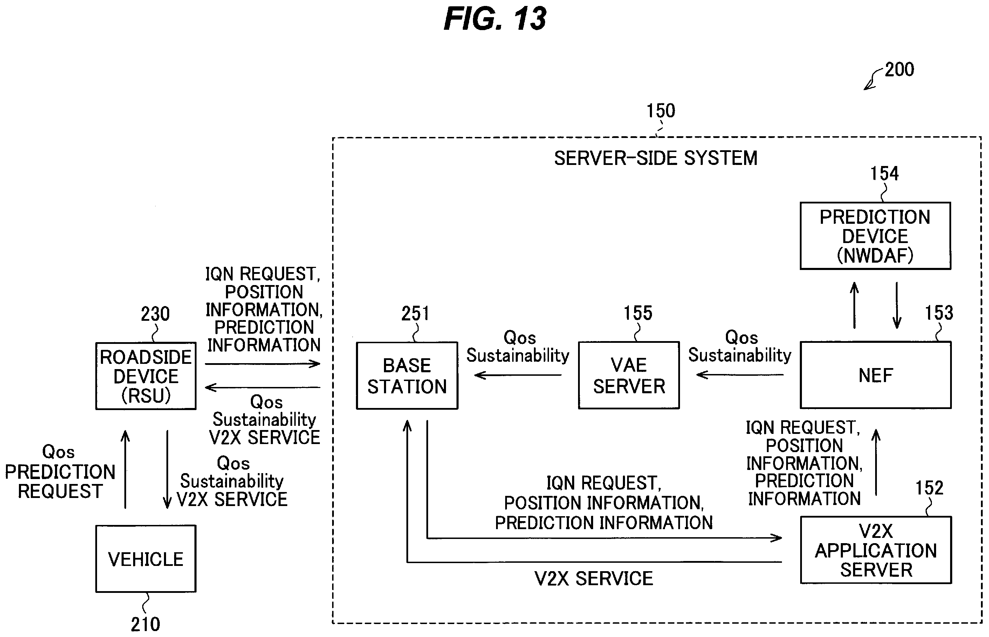

FIG. 13 is a block diagram schematically illustrating a configuration of a communication system 200 according to a second embodiment.

The communication system 200 includes a vehicle 210, a roadside device 230, and the server-side system 150.

In the first embodiment, the vehicle 110 receives the V2X service via the base station 151, while in the second embodiment, the vehicle 210 receives the V2X service via the roadside device 230.

For example, in the second embodiment, the vehicle 210 performs vehicle-side prediction that is prediction of a communication quality of a communication path between the vehicle 210 and the roadside device 230. Then, the vehicle 210 receives provision of the V2X service via the roadside device 230 in accordance with the prediction result from the roadside device 230 and the result of the vehicle-side prediction.

The QoS Sustainability collected by the roadside device 230 is the communication quality of the communication path from the V2X application server 152 to the roadside device 230. When the V2X service is received via the roadside device 230, the vehicle 210 requires the prediction result of the communication quality between the roadside device 230 and the vehicle 210, in addition to the QoS Sustainability.
This will be described below.

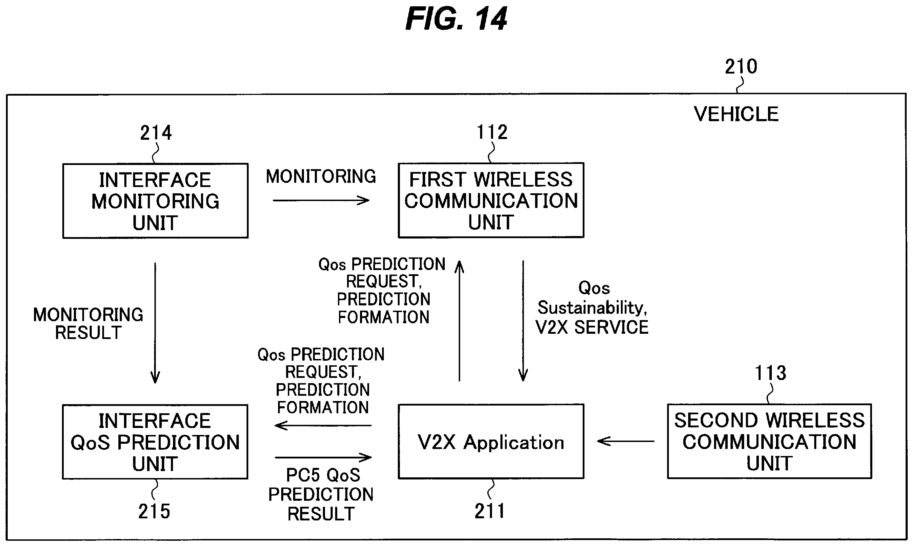

FIG. 14 is a block diagram schematically illustrating a main configuration of the vehicle 210 in the second embodiment.

It is noted that also in FIG. 14, components required for the vehicle 210 to run are omitted.

The vehicle 210 includes a V2X Application 211, the first wireless communication unit 112, the second wireless communication unit 113, an interface monitoring unit 214, and an interface QoS prediction unit 215.

The first wireless communication unit 112 and the second wireless communication unit 113 of the vehicle 210 in the second embodiment are substantially the same as the first wireless communication unit 112 and the second wireless communication unit 113 of the vehicle 110 in the first embodiment, respectively.

The V2X Application 211 performs a process required on the vehicle 210 side in order to receive provision of a V2X service.

For example, the V2X Application 211 transmits a QoS prediction request and prediction information to the nearest roadside device 230 via the first wireless communication unit 112.

Then, the V2X Application 211 receives QoS Sustainability from the nearest roadside device 230 via the first wireless communication unit 112 as a response to the QoS prediction request.

The V2X Application 211 further provides the QoS prediction request and the prediction information to the interface QoS prediction unit 215.

Then, the V2X Application 211 receives, from the interface QoS prediction unit 215, a PC5 QoS prediction result that is a prediction result of QoS between the first wireless communication unit 112 and the nearest roadside device 230.

The V2X Application 211 executes V2X adaptation in accordance with the contents of the QoS Sustainability provided from the roadside device 230 and the PC5 QoS prediction result provided from the interface QoS prediction unit 215.

However, when the V2X Application 211 executes the V2X adaptation, the V2X Application 211 receives provision of the V2X service via the first wireless communication unit 112 and the roadside device 230, unlike in the first embodiment.

The interface monitoring unit 214 constantly monitors the communication quality between the first wireless communication unit 112 and the roadside device 230. Here, since the first wireless communication unit 112 wirelessly communicates with the roadside device 230 via a PC5, the interface monitoring unit 214 monitors the communication quality of the PC5. The interface monitoring unit 214 then provides a monitoring result to the interface QoS prediction unit 215.

Based on the QoS prediction request and prediction information that are provided from the V2X Application 111, the interface QoS prediction unit 215 performs QoS prediction on the PC5 and provides a PC5 QoS prediction result that is the prediction result thereof, to the V2X Application 211.

A part or all of the interface monitoring unit 214 and the interface QoS prediction unit 215 described above can also be implemented by, for example, the memory 10 and the processor 11 such as a CPU that executes a program stored in the memory 10, as illustrated in FIG. 5A. Such a program may be provided via a network or may be provided by being recorded on a recording medium. That is, such a program may be provided, for example, as a program product.

Further, a part or all of the interface monitoring unit 214 and the interface QoS prediction unit 215 can also be implemented by, for example, the processing circuit 12, such as a single circuit, a composite circuit, a processor operating based on a program, a parallel processor operating based on a program, an ASIC or FPGA, as illustrated in FIG. 5B.

As described above, the interface monitoring unit 214 and the interface QoS prediction unit 215 can be implemented by processing circuitry.

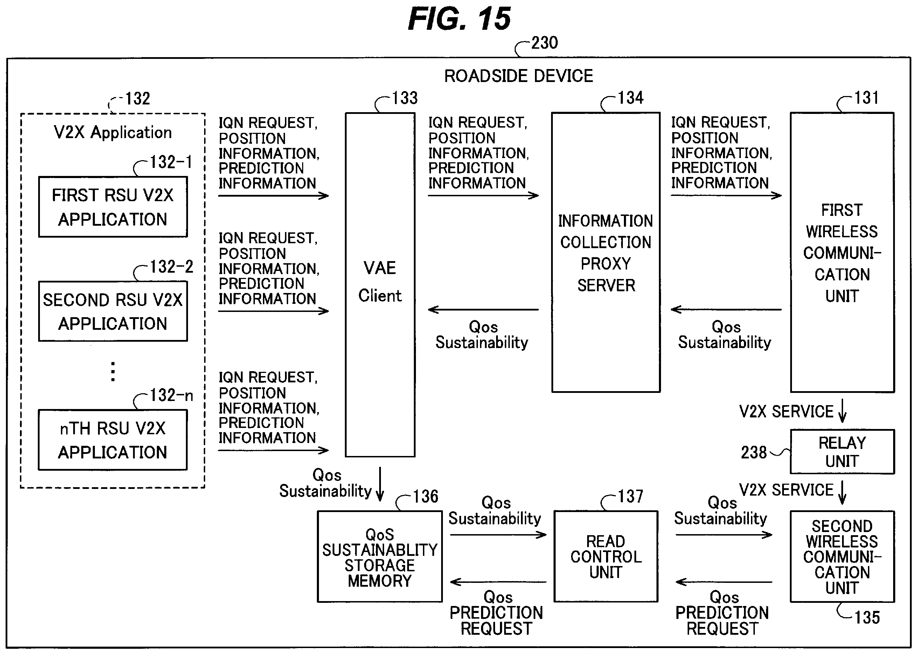

FIG. 15 is a block diagram schematically illustrating a configuration of the roadside device 230 of the second embodiment.

The roadside device 230 includes the first wireless communication unit 131, the V2X Application 132, the VAE Client 133, the information collection Proxy Server 134, the second wireless communication unit 135, the QoS Sustainability storage memory 136, the read control unit 137, and a relay unit 238.

The second wireless communication unit 135, the QoS Sustainability storage memory 136, the read control unit 137, the first wireless communication unit 131, the V2X Application 132, the VAE Client 133, and the information collection Proxy Server 134 of the roadside device 230 in the second embodiment are substantially the same as the second wireless communication unit 135, the QoS Sustainability storage memory 136, the read control unit 137, the first wireless communication unit 131, the V2X Application 132, the VAE Client 133, and the information collection Proxy Server 134 of the roadside device 130 in the first embodiment, respectively.

When the first wireless communication unit 131 receives a V2X service, the relay unit 238 transmits the V2X service to the vehicle 210 from the second wireless communication unit 135.

A part or all of the relay unit 238 described above can also be implemented by, for example, the memory 10 and the processor 11 such as a CPU that executes a program stored in the memory 10, as illustrated in FIG. 5A. Such a program may be provided via a network or may be provided by being recorded on a recording medium. That is, such a program may be provided, for example, as a program product.

Further, a part or all of the relay unit 238 described above can also be implemented by, for example, the processing circuit 12 such as a single circuit, a composite circuit, a processor operating based on a program, a parallel processor operating based on a program, an ASIC, or an FPGA, as illustrated in FIG. 5B.

As described above, the relay unit 238 described above can be implemented by processing circuitry.

To return to FIG. 13, a base station 251 is a wireless base station that performs wireless communication.

The base station 251 transmits the IQN request, the prediction information, and the position information, which are provided from the roadside device 230, to the V2X application server 152.

Then, as a response to the IQN request, the base station 251 receives QoS Sustainability from the VAE server 155, and transmits the QoS Sustainability to the roadside device 230.

Further, the base station 251 relays the V2X service provided by the V2X Application Server 152 to the vehicle 210 via the roadside device 230.

As described above, according to the second embodiment, the vehicle 210 can receive provision of the V2X service via the roadside device 230. In this case, the vehicle 210 may not include the second wireless communication unit 113.

### DESCRIPTION OF REFERENCE CHARACTERS

- 100, 200: communication system
- 110, 210: vehicle
- 111, 211: V2X Application
- 112: first wireless communication unit
- 113: second wireless communication unit
- 214: interface monitoring unit
- 215: interface QoS prediction unit
- 130, 230: roadside device
- 131: first wireless communication unit
- 132: V2X Application
- 133: VAE Client
- 134: information collection Proxy Server
- 135: second wireless communication unit
- 136: QoS Sustainability storage memory
- 137: read control unit
- 238: relay unit
- 150: server-side system
- 151: base station
- 152: V2X application server
- 153: NEF
- 154: prediction device
- 155: VAE server

## Claims

1. A communication system, comprising:
a vehicle;
a roadside device to be disposed along a road on which the vehicle runs; and
a prediction system configured to predict a communication quality of a communication path from a service device to the roadside device, the service device being configured to provide a V2X service to the vehicle,
wherein the roadside device is configured to transmit a prediction request, prediction information, and position information to the prediction system sequentially at a predetermined time interval, the prediction request requesting prediction of the communication quality, the prediction information being information necessary for the prediction, the position information indicating a position of the roadside device,
wherein the prediction system is configured to execute prediction of the communication quality by using the prediction information and the position information each time the prediction system receives the prediction request, and transmit a prediction result to the roadside device sequentially, the prediction result being a result of the prediction, and
wherein the roadside device is configured to store the prediction result sequentially and transmit the prediction result stored latest to the vehicle when the roadside device receives the prediction request from the vehicle.

2. The communication system according to claim 1,
wherein the prediction information includes a prediction period that is a period defined for the V2X service, and
wherein a start timing of the prediction period is later than a timing when a delay time has elapsed, the delay time being defined as a time from when the roadside device transmits the prediction request until the roadside device receives the prediction result corresponding thereto.

3. The communication system according to claim 2, wherein the delay time is predetermined.

4. The communication system according to claim 2, wherein the roadside device is configured to measure the delay time sequentially and calculate the start timing of the prediction period by using the delay time measured latest.

5. The communication system according to claim 1,
wherein the prediction information includes a prediction period, and
wherein the prediction period is a period obtained by adding the predetermined time interval to a period defined for the V2X service.

6. The communication system according to any one of claims 1 to 5, wherein the predetermined time interval is shorter than an error allowed as an error of the prediction.

7. The communication system according to any one of claims 1 to 6, wherein the vehicle is configured to perform vehicle-side prediction, and receive provision of the V2X service via the roadside device in accordance with the prediction result from the roadside device and a result of the vehicle-side prediction, the vehicle-side prediction being prediction of a communication quality of a communication path between the vehicle and the roadside device.

8. A roadside device to be disposed along a road on which a vehicle runs, the roadside device comprising:
a first communication unit configured to transmit a prediction request, prediction information, and position information to a prediction system sequentially at a predetermined time interval and sequentially receive a prediction result from the prediction system as a response to the prediction request, the prediction request requesting prediction of a communication quality of a communication path from a service device to the roadside device, the prediction information being information necessary for the prediction, the position information indicating a position of the roadside device, the prediction system being configured to predict the communication quality of the communication path, the service device being configured to provide a V2X service to the vehicle, the prediction result being a result of the prediction;
a storage unit configured to store the prediction result;
a second communication unit configured to receive a prediction request from the vehicle; and
a read control unit configured to read the prediction result stored latest when the prediction request is received from the vehicle, and cause the second communication unit to transmit the read prediction result to the vehicle.

9. A program to cause a computer to function as a roadside device to be disposed along a road on which a vehicle runs, the program causing the computer to function as:
a first communication unit configured to transmit a prediction request, prediction information, and position information to a prediction system sequentially at a predetermined time interval and sequentially receive a prediction result from the prediction system as a response to the prediction request, the prediction request requesting prediction of a communication quality of a communication path from a service device to the roadside device, the prediction information being information necessary for the prediction, the position information indicating a position of the roadside device, the prediction system being configured to predict the communication quality of the communication path, the service device being configured to provide a V2X service to the vehicle, the prediction result being a result of the prediction;
a storage unit configured to store the prediction result;
a second communication unit configured to receive a prediction request from the vehicle; and
a read control unit configured to read the prediction result stored latest when the prediction request is received from the vehicle, and cause the second communication unit to transmit the read prediction result to the vehicle.

10. A communication method to be performed by a roadside device disposed along a road on which a vehicle runs, the communication method comprising:
transmitting a prediction request, prediction information, and position information to a prediction system sequentially at a predetermined time interval, the prediction request requesting prediction of a communication quality of a communication path from a service device to the roadside device, the prediction information being information necessary for the prediction, the position information indicating a position of the roadside device, the prediction system being configured to predict the communication quality of the communication path, the service device being configured to provide a V2X service to the vehicle;
sequentially receiving a prediction result from the prediction system as a response to the prediction request, the prediction result being a result of the prediction;
storing the prediction result;
receiving a prediction request from the vehicle;
reading the prediction result stored latest when the prediction request is received from the vehicle, and
transmitting the read prediction result to the vehicle.
